# EUROPEAN PATENT SPECIFICATION

(11) **EP 0 565 272 B1**
(45) Date of publication and mention of the grant of the patent: **21.05.1997**
(21) Application number: 93302249.3
(22) Date of filing: 24.03.1993
(51) Int. Cl.: C23C 2/20

(54) **Stripping liquid coatings**
Abstreifen von flüssigen Beschichtungen
Elimination d'un revêtement liquide

(30) Priority: 06.04.1992 AU 1739/92
(43) Date of publication of application: 13.10.1993
(73) Proprietor: BHP STEEL (JLA) PTY Ltd, Sydney, New South Wales 2000 (AU)
(72) Inventor: Tu, Cat Vo, New South Wales 2518 (AU)
(74) Representative: Yeadon, Mary Elizabeth

(56) References cited:
- US-A- 2 526 731
- PATENT ABSTRACTS OF JAPAN vol. 14, no. 427 (C-758)(4370) 13 September 1990 & JP-A-21 63 358
- PATENT ABSTRACTS OF JAPAN vol. 11, no. 229 (C-436)(2676) 25 July 1987 & JP-A-62 40 350

## Description

The present invention relates to apparatus of the kind used to remove excess liquid coating from a moving strip emerging from a coating bath and which operate by directing jet streams of pressurised gas onto the coated surfaces of the strip and methods of using such apparatus.

The invention was developed to control the thickness of the zinc or aluminium/zinc alloy coating applied to steel strip in a continuous hot dip galvanising plant, and is described primarily in that context hereinafter. It will be understood, however, that the apparatus of the invention is equally applicable to the control of liquid coatings generally on any moving strip substrate.

In a typical continuous strip hot dip galvanising process, a strip of steel to be coated, after preliminary treatment, passes downwardly into a bath of molten zinc or zinc/aluminium alloy, around a sink roll submerged in the bath, upwardly past at least one deflector roll located just below the surface of the bath, through jet stripping apparatus located closely above the bath, and to and about a turn-around roll located well above the bath.

Traditionally, the jet stripping apparatus has comprised elongate nozzles, one on each side of the strip, extending transversely of the strip and each directing a substantially planar jet stream of gas against the vertical strip. The gas stream acts as a barrier preventing the passage of the outermost layers of the coating material, but allowing a thin, still liquid, inner layer to advance with the strip.

Such a system is disclosed in Japanese Patent Application No. 60-178966. This application addresses the problem of differential cooling of the coating. It provides additional nozzles supplying hot gas to heat up the edges of the coated strip to keep the coating there molten and prevent it from solidifying so that the wiping (stripping) jets (12) are able to reduce the thickness of the coating over all of the strip. The heating nozzles (13) do not affect the thickness of the strip but merely keep the coating at the edges from solidifying.

The turn-around roll is the first solid object to contact the coated strip, and it is necessary for the coating to have solidified before contact is made. Having regard to the speed of operation of modern plants, the turn-around roll is, therefore, a considerable distance above the bath, even though strip coolers may be provided to ensure that the coating solidifies before it reaches the roll.

Because of its length, the unsupported strip between the bath and the turn-around roll tends to vibrate. The vibrations cause variations in the distances between the strip and the respective stripping nozzles, and this results in objectionable variations in the coating thickness.

To overcome that disability it has been proposed to provide a gas pressure stabilising pad, sometimes referred to as a floater pad, on each side of the strip above the stripping nozzles. Each such pad comprises a reaction body adjacent to, but spaced from, the strip, and nozzles directing pressurised gas into the space between the strip and the body. Thus, a gas pressure is built up within the space having a value which depends inversely on the leakage from that space, which, in turn, depends on the distance between the body and the strip. The pads are in register, and their net effect is to provide a restoring force whenever the strip wanders from a stable position which, assuming identical pads and gas supplies, is midway between the pads. Floater pads of that kind are described in the complete specification of Australian Patent 529545 in the name of Nippon Steel Corporation.

It is also known to combine a floater pad and a gas stripping apparatus into a single unit having two nozzles. Typically, such a dual-nozzle assembly comprises upper and lower, parallel nozzles, spaced apart by a reaction body. A dual nozzle floater pad/stripping assembly of that kind is described in the complete specification of Australian patent No. 581081 in the name of the present applicant. In that document the two nozzles are angled towards each other so as to be directed towards a coincident line on a plane which is equidistant from the nozzles of each assembly. The combined nozzle arrangement gives the effect of a conventional stripping nozzle but with stabilization of the strip as provided by a conventional floater pad.

It is know that if a traditional isolated or stand alone stripping nozzle is used, the stripping jet stream divides, on impingement with the strip, into upwardly flowing and downwardly flowing component streams. It has been found that the upwardly flowing component stream may produce ripples in the surface of the still liquid coating material on the strip above the line of impingement. Thus it has also been proposed to provide a compensating nozzle disposed some distance above each stripping nozzle and liberating a downwardly directed gas stream. That downwardly directed stream annuls or overwhelms the upward flowing component of the stripping jet stream and prevents the formation of the aforesaid ripples. Such a compensating nozzle and its effect are described in the specification of U.S. Patent No. 3607366 in the name of Yawata Iron & Steel Co. Ltd.

In all prior known arrangement as discussed above, the stripping of each side of the strip, that is to say the prevention of the passage of more coating material than that required in the finished product, has been effected by a single gas jet stream, being the stream first met by the strip as it rises from the bath. In dual nozzle stripping/floater pad assemblies the jet stream from the lower nozzle does the stripping and the upper jet stream does not alter the thickness of the liquid coating on which it plays. Likewise, when a compensating nozzle is present, its jet stream plays no part in the reduction of mean coating thickness. It is still the lower jet stream which does the stripping.

The liquid coating dragged up from the bath by the strip has its maximum thickness at the surface of the bath. As it rises further from the bath it is accelerated by viscous drag from the strip, so that its mean upward speed asymptotically approaches that of the strip, which speed is fully attained on solidification, and its mean thickness correspondingly decreases. The stripping jet stream is necessarily positioned where the coating reaching it is still thicker than the required finished coating, and the gas pressure, nozzle outlet width and nominal nozzle spacing from the strip are chosen having regard to the strip speed so as to produce a residual coating layer of the required thickness (typically about 20 micrometres).

While all of the dragged up liquid may be rising with the strip, at least the outer layers move more slowly than the strip and the liquid immediately adjacent the strip. That is to say, relative to the strip and the liquid in direct frictional engagement with the strip, the outer layers of the dragged up liquid, including the liquid coating material which is held back by the stripping jet stream, are moving downwardly in the manner of a falling cascade flowing over a stationary surface. Thus, the coating material below the stripping jet stream takes on the typical appearance of such a cascade, with irregular ripple or wave formations extending generally horizontally across its surface.

It has been found that conventional gas stripping devices are unable to suppress those ripple or wave formations completely, with the result that the finished coating has undesirable surface irregularities and/or the coating has undesirable localised variations in thickness, due to the residual effect of those ripple or wave formations.

An object of the present invention is to substantially eliminate the aforesaid undesirable characteristics, and so provide a smoother and more uniform coating than has been attainable hitherto.

According to the present invention there is provided a method of producing a smooth liquid coating on a substrate strip of the kind comprising passing the strip through a liquid bath of coating material to produce an over thick coating thereon and thereafter stripping surplus material from the over thick coating to produce a coating of desired thickness, characterised by the step of smoothing the surface of the over thick coating before stripping the surplus material therefrom.

Preferably the step of smoothing the surface comprises impinging a smoothing jet stream of gas on the over thick coating in an amount and at a pressure sufficient to smooth the surface of the over thick coating to produce a smoothed over thick coating, and the step of stripping surplus material comprises thereafter impinging a stripping jet stream of gas on the over thick coating in an amount and at a pressure sufficient to reduce the thickness of the smoothed over thick coating to a final desired thickness, wherein the smoothing jet stream is weaker than the stripping jet stream.

According to the present invention there is also provided apparatus for use in the method of the present invention which apparatus comprises a stripping nozzle positioned to direct a stripping gas jet stream against one side of a strip emerging from a coating bath with a layer of bath material thereon and means to supply gas to the stripping nozzle at a pressure sufficient to liberate an effective stripping jet stream therefrom, characterised in that the apparatus also comprises surface modifying means spaced above the bath a distance sufficient such that surface irregularities have formed in the coating after the coated strip has emerged from the bath and below the stripping nozzle a distance which is effective to smooth the whole of the surface of the layer prior to it reaching the stripping jet stream.

Preferably the surface modifying means comprises a smoothing nozzle positioned to direct a surface modifying gas jet stream against the one side of the strip and means to supply gas to the smoothing nozzle at a pressure sufficient to liberate a surface modifying jet stream therefrom; the surface modifying jet stream being effective to smooth the layer of bath material passing it but not to substantially affect the quantity of material passing it.

The invention achieves that object by providing surface modifying means closely below the line of impingement of the stripping jet. Those surface modifying means may comprise a doctor blade spaced from the strip to an extent such that it only affects the outermost layer of the coating material, but preferably comprises a smoothing nozzle playing a surface modifying, relatively weak jet stream upon the rising coating material. The surface modifying jet stream is too weak to substantially affect the amount of coating material ascending past it, but does serve to at least partially suppress the surface ripples or waves thereon. Thus a smoother liquid layer is presented to the stripping jet, with a consequent improvement in the smoothness and uniformity of the layer departing from it.

Therefore, the invention consists in a jet stripping apparatus comprising a stripping nozzle positioned to direct a stripping gas jet stream against one side of a strip emerging from a coating bath with a layer of bath material thereon, means to supply gas to said stripping nozzle at a pressure sufficient to liberate an effective stripping jet stream therefrom characterised in that the apparatus also has surface modifying means spaced above the bath a distance sufficient such that surface irregularities have formed in the coating after the coated strip has emerged from the bath and below said stripping nozzle a distance which is effective to smooth the whole of the surface of said layer prior to it reaching the strippng jet stream.

The invention further allows a method of continuously coating a strip comprising the steps as defined in claim 1.

By way of example, an embodiment of the above described invention is described in more detail hereinafter with reference to the accompanying drawings, in which:
Figures 1 and 2 are diagrammatic, not to scale, cross-sectional views of conventional gas stripping apparatus; and
Figures 3 and 6 are similar views of four embodiments of the invention.

In the drawings corresponding items bear corresponding reference numerals.

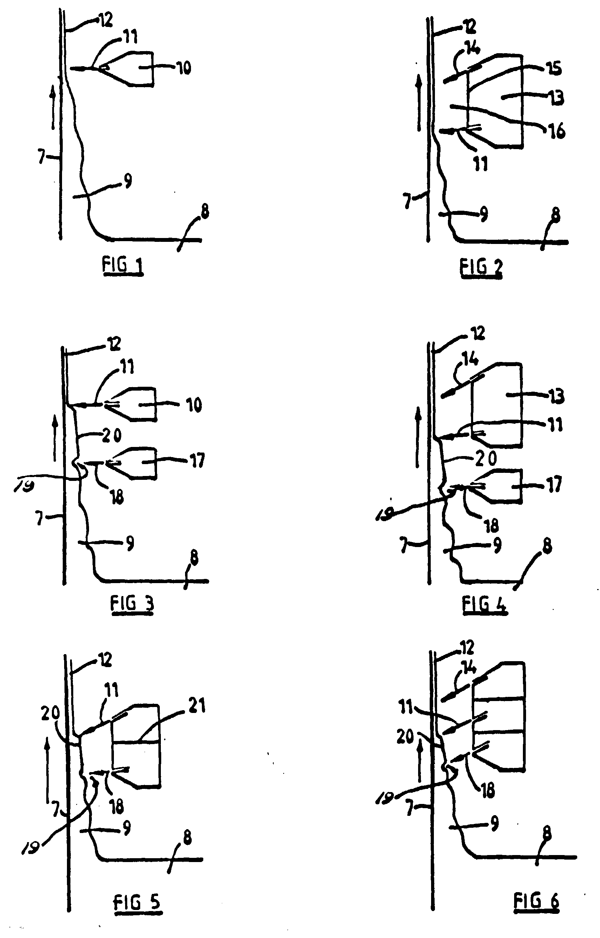

Figure 1 shows a traditional arrangement wherein a strip 7 rises from a bath 8 of molten metal coating material and drags a layer 9 of coating material with it. The strip 7 travels past a stripping nozzle 10 which directs a stripping gas jet stream 11 towards the strip 7. Below the stripping jet stream 11 the surface of the layer 9 shows unstable wave formations and the layer itself, although progressively decreasing in mean thickness, is thicker than the relatively constant thickness and thinner coating layer 12 to which the layer 9 is reduced by the action of the stripping jet stream 11.

The coating layer 12 may only be said to be of "relatively constant thickness" because the jet stream 11 is unable completely to eliminate or prevent the passage of the surface waves, so that residual irregularities remain in the coating layer 12 as it departs from the stripping jet stream 11.

This effect is particularly marked at slow strip speeds as the jet stream 11 is then necessarily reduced in strength, either because the gas pressure to the nozzle 10 is reduced or because the width of its outlet slot is reduced or both, by comparison with the values pertaining at high speed operation. This is to ensure that the finished coating is of adequate thickness. The invention overcomes this effect and thus is particularly beneficial when applied to low speed production lines.

In this figure, only the situation to the right of the strip 7 is shown. In actuality coating material is dragged up on both sides of the strip 7 and that on the left hand side is stripped by a stripping nozzle aligned with and opposing nozzle 10. The full diagram would include a left hand half which, except for the instability in the surface of the layers of coating material below the nozzles, would in general be a mirror image of the right hand half constituting the figure as drawn. This applies to all of the figures herewith.

Figure 2 illustrates a dual nozzle stripper/floater pad for use in the present invention. The stripping is effected by the lower jet stream 11 emanating from a dual nozzle stripping/floater pad combination 13. The upper jet stream 14 merely cooperates with the stripping jet stream 11 to maintain a stabilising gas pressure in the space 16 between the reaction surface 15 of the stripping/floater pad combination and the strip 7. It has no substantial effect on the thickness of the reduced coating layer 12.

Figure 3 shows an arrangement the same as that of figure 1 except for the addition, in accordance with the invention, of surface modifying means comprising, in this instance, a smoothing nozzle 17 spaced slightly below the stripping nozzle 10. The smoothing nozzle 17 directs a surface modifying jet stream 18 onto the coating material 9.

The jet stream 18 is not strong enough to prevent the upward movement of substantial amounts of coating material. It only affects the outer layers of the material and produces a standing, substantially linear trough 19 in the surface coating. This serves to replace the unstable and variable wave pattern below the jet stream 18 with a constant or steady condition and results in a substantially smooth surface 20 on the layer of coating material proceeding to the stripping jet stream 11. This in turn produces a more regular and smoother coating layer 12 than would otherwise be.

According to this embodiment of the invention as applied, for example, to a typical aluminium/zinc alloy coating process run at a strip speed of 25 metres per minute, the surface modifying jet stream 18 may issue from a nozzle in the order of a millimetre wide or narrower, say 0.4 mm, spaced about 10 mm from the strip and fed with gas at a pressure in the range of 2-10 kPa, preferably about 4.0 kPa. This may be contrasted with typical stripping jet stream parameters, as found in prior art devices (such as, for example, those of the Yawata Iron and Steel patent referred to above), namely, for the lowest practicable strip speed of say 10 metres/minute, a nozzle at least 0.5 mm wide spaced 3 mm from the strip and fed with gas at a pressure of at least 25 kPa and, for more usual strip speeds, say up to 60 metres/minute, a nozzle 3 mm wide, spaced 5 mm from the strip and fed with gas at a pressure of 300 kPa.

The jet streams 11 and 18 are shown as normal to the strip 7. This is frequently the case, but it will be known to those skilled in the art that this is not essential and in other embodiments the several jet streams may be inclined downwardly or upwardly at angles up to about 45° to the horizontal. This applies to all of the illustrated embodiments.

Figure 4 shows an arrangement in which the stripping is effected by a stripping/floater pad assembly 13 as shown in figure 2, and the prior smoothing is effected by a smoothing nozzle 17 similar to and operating in the same way as the corresponding nozzle 17 in figure 3.

Figure 5 shows a combined smoothing/stripping assembly which may be used to effect the method of the present invention. In the drawing the plenum chamber feeding the respective smoothing and stripping nozzles is shown with a dividing wall 21, enabling each jet to be fed from separately controllable gas supplies. In other embodiments the required strength relationship can be achieved using a common gas source by varying the respective nozzle's outlet widths and spacings from the strip.

Figure 6 shows another possibility wherein the surface modifying means are united with a stripping/floater pad assembly. The plenum chamber is shown divided to enable jet strengths to be adjusted by control of their respective supply pressures, but once again, if preferred, this may be achieved by choice of nozzle widths and spacings from the strip.

In all instances in apparatus according to the invention utilising surface modifying means comprising a nozzle releasing a smoothing jet stream, the stripping jet stream which is located above the smoothing jet stream may issue from a nozzle having an outlet width that is smaller, equal to or greater than that of the nozzle of the smoothing jet stream, provided that the stripping jet stream has the stronger effect. As an example, all else being equal, a smoothing nozzle having a width of 0.4 mm may be used in conjunction with a stripping nozzle of width 0.8 mm. If the stripping nozzle is narrower than the smoothing nozzle, then the other parameters (supply pressures, distance from strip, and angles of attack) must be selected to ensure that the stripping jet stream has the dominant effect in determining the final coating thickness.

## Claims

1. A method of producing a smooth liquid coating on a substrate strip of the kind comprising passing the strip through a bath of liquid coating material to produce an over thick coating thereon and thereafter stripping surplus material from the over thick coating to produce a coating of desired thickness, characterised by the step of smoothing the surface of the over thick coating before stripping the surplus material therefrom.

2. A method according to claim 1, wherein the step of smoothing the surface comprises impinging a smoothing jet stream of gas on the over thick coating in an amount and at a pressure sufficient to smooth the surface of the over thick coating to produce a smoothed over thick coating, and the step of stripping surplus material comprises thereafter impinging a stripping jet stream of gas on the over thick coating in an amount and at a pressure sufficient to reduce the thickness of the smoothed over thick coating to a final desired thickness, wherein the smoothing jet stream is weaker than the stripping jet stream.

3. A method according to claim 2, wherein the strip comprises steel and the coating comprises aluminium/zinc alloy coating material, the steep strip is run at a strip speed of approximately 25 metres per minute, the smoothing jet stream is issued through a nozzle approximately 0.4mm wide and spaced approximately 10mm from the strip and at a pressure in the range from 2 to 10 kPa.

4. A method according to claim 3, wherein the smoothing jet stream is issued at a pressure of substantially 4.0 kPa.

5. A method of continuously coating a strip according to any one of claims 1 to 3 which comprises the steps of:
passing the strip through a bath of liquid coating material;
dragging a layer of coating material out of the bath disposed on the surface of the strip;
allowing surface irregularities to form on the layer of coating material disposed on the strip;
then smoothing out by surface modifying means the irregularities on the surface of the layer of coating material on the strip dragged by it from the bath; and
directly thereafter stripping surplus material from the strip.

6. Jet stripping apparatus for use in a method according to any one of claims 1 to 5, which comprises a stripping nozzle positioned to direct a stripping gas jet stream (11) against one side of a strip (7) emerging from a coating bath (18) with a layer of bath material (9) thereon and means to supply gas to the stripping nozzle at a pressure sufficient to liberate an effective stripping jet stream (11) therefrom, characterised in that the apparatus also comprises surface modifying means (17) spaced above the bath (8) a distance sufficient such that surface irregularities have formed in the coating after the coated strip has emerged from the bath and below the stripping nozzle a distance which is effective to smooth the whole of the surface of the layer prior to it reaching the stripping jet stream (11).

7. Apparatus according to claim 6, wherein the surface modifying means comprises a smoothing nozzle positioned to direct a surface modifying gas jet stream (18) against the one side of the strip and means to supply gas to the smoothing nozzle at a pressure sufficient to liberate a surface modifying jet stream (18) therefrom; the surface modifying jet stream being effective to smooth the layer of bath material passing it but not to substantially affect the quantity of material passing it.

8. Apparatus according to claim 7, wherein the strip comprises steel and the coating comprises aluminium/zinc alloy coating material, means for running the steel strip at a strip speed of approximately 25 metres per minute, means for issuing the surface modifying jet stream from a smoothing nozzle which is approximately 0.4 mm wide and is spaced approximately 10 mm from the strip, and means for feeding gas through the smoothing nozzle at a pressure in the range of from 2 to 10 kPa.

9. Apparatus according to claim 8, wherein said gas pressure is substantially 4.0 kPa.

10. Apparatus according to any one of claims 6 to 9, wherein the apparatus further comprises a floater pad having a reaction surface and a pressure control nozzle for directing gas into the space between the strip and the reaction surface, which floater pad is spaced above the stripping nozzle.

11. Apparatus according to claim 10, wherein the smoothing nozzle, the stripping nozzle and the floater pad are united in a smoothing/stripping/floater pad assembly.

12. Apparatus according to claim 11, wherein the smoothing/stripping/floater pad assembly comprises a compartmented plenum chamber wherein an upper compartment feeds the pressure control nozzle, an intermediate compartment feeds the stripping nozzle and a bottom compartment feeds the smoothing nozzle, and means to independently control the gas pressure in each compartment.

13. Apparatus according to any one of claims 6 to 12, wherein either the surface modifying means, the stripping nozzle or both are positioned substantially normal to the strip.

## Patentansprüche

1. Verfahren zur Herstellung einer glatten, flüssigen Beschichtung auf einem Substratband der Art, die umfaßt:
Führen des Bandes durch ein Bad mit flüssigem Beschichtungsmaterial zur Erzeugung einer überdicken Beschichtung darauf und danach Abstreifen von überschüssigem Material von der überdicken Beschichtung zur Herstellung einer Beschichtung gewünschter Stärke,
gekennzeichnet durch
den Schritt Glätten der Oberfläche der überdicken Beschichtung vor dem Abstreifen des überschüssigen Materials davon.

2. Verfahren nach Anspruch 1, wobei der Schritt Glätten der Oberfläche das Auftreffen eines Glättungs-Gasdüsenstrahls auf der überdicken Beschichtung mit ausreichender Stärke und Druck zur Glättung der Oberfläche der überdicken Beschichtung umfaßt, um eine geglättete überdicke Beschichtung zu erzeugen, und der Schritt Abstreifen von überschüssigem Material danach das Auftreffen eines Abstreif-Gasdüsenstrahls auf der überdicken Beschichtung mit ausreichender Stärke und Druck umfaßt, um die Dicke der geglätteten überdicken Beschichtung auf eine gewünschte Endstärke zu reduzieren, wobei der Glättungs-Düsenstrahl schwächer ist als der Abstreif-Düsenstrahl.

3. Verfahren nach Anspruch 2, wobei das Band Stahl umfaßt und die Beschichtung Aluminium/Zink-Legierungs-Beschichtungsmaterial umfaßt, das steile Band mit einer Bandgeschwindigkeit von ca. 25 m pro Minute angetrieben wird, der Glättungs-Düsenstrahl durch eine ca. 0,4 mm breite und ca. 10 mm von dem Band beabstandete Düse und mit einem Druck im Bereich von 2 bis 10 kPa ausgesandt wird.

4. Verfahren nach Anspruch 3, wobei der Glättungs-Düsenstrahl mit einem Druck von im wesentlichen 4,0 kPa ausgesandt wird.

5. Verfahren zum kontinuierlichen Beschichten eines Bandes gemäß einem der Ansprüche 1 bis 3, mit den Schritten: Führen des Bandes durch ein Bad mit flüssigem Beschichtungsmaterial;
Mitnehmen einer auf der Oberfläche des Bandes abgelagerten Beschichtungsmaterialschicht aus dem Bad;
Zulassen der Ausbildung von Oberflächenunregelmäßigkeiten auf der auf dem Band abgelagerten Beschichtungsmaterialschicht;
danach Abglätten der Unregelmäßigkeiten auf der Oberfläche der von dem Band aus dem Bad mitgenommenen Beschichtungsmaterialschicht auf dem Band durch Oberflächenveränderungsmittel; und
direkt danach Abstreifen von überschüssigem Material von dem Band.

6. Strahl-Abstreifvorrichtung zur Verwendung bei einem Verfahren gemäß einem der Ansprüche 1 bis 5, mit einer Abstreifdüse, die so angeordnet ist, daß sie einen Abstreif-Gasdüsenstrahl (11) gegen eine Seite eines Bandes (7) richtet, das aus einem Beschichtungsbad (18) mit einer Badmaterialschicht (9) darauf herauskommt, und einer Vorrichtung zur Zuführung von Gas an die Abstreifdüse mit genügend Druck, um einen wirksamen Abstreif-Düsenstrahl (11) daraus freizusetzen,
dadurch gekennzeichnet, daß
die Vorrichtung auch Oberflächenveränderungsmittel (17) aufweist, die mit genügend Abstand über dem Bad (8) angeordnet sind, so daß sich Oberflächenunregelmäßigkeiten in der Beschichtung gebildet haben, nachdem das beschichtete Band aus dem Bad herausgekommen ist, und mit einem Abstand unter der Abstreifdüse angeordnet sind, der wirksam dazu beiträgt, die gesamte Oberfläche der Schicht zu glätten, bevor sie den Abstreif-Düsenstrahl (11) erreicht.

7. Vorrichtung nach Anspruch 6, wobei die Oberflächenveränderungseinrichtung eine Glättungsdüse aufweist, die so angeordnet ist, daß sie einen Oberflächenveränderungs-Gasdüsenstrahl (18) gegen die eine Seite des Bandes richtet, und Mittel aufweist, um Gas mit genügend Druck an die Glättungsdüse zu liefern, um einen Oberflächenveränderungs-Düsenstrahl (18) daraus freizusetzen; wobei der Oberflächenveränderungs-Düsenstrahl dazu beiträgt, die daran vorbeiziehende Badmaterialschicht zu glätten, aber die daran vorbeiziehende Materialmenge nicht wesentlich anzugreifen.

8. Vorrichtung nach Anspruch 7, wobei das Band Stahl umfaßt und die Beschichtung Aluminium/Zink-Legierungs-Beschichtungsmaterial umfaßt, Mittel zum Antreiben des Stahlbandes mit einer Bandgeschwindigkeit von ca. 25 m pro Minute, Mittel zum Aussenden des Oberflächenveränderungs-Düsenstrahls aus einer ca. 0,4 mm breiten und ca. 10 mm von dem Band beabstandeten Glättungsdüse, und Mittel zum Zuführen von Gas durch die Glättungsdüse mit einem Druck im Bereich von 2 bis 10 kPa.

9. Vorrichtung nach Anspruch 8, wobei der Gasdruck im wesentlichen 4,0 kPa beträgt.

10. Vorrichtung nach einem der Ansprüche 6 bis 9, wobei die Vorrichtung ferner einen Tragkörper mit einer Reaktionsfläche und eine Drucksteuerungsdüse aufweist, um Gas in den Zwischenraum zwischen dem Band und der Reaktionsfläche zu richten, wobei der Tragkörper über der Abstreifdüse beabstandet angeordnet ist.

11. Vorrichtung nach Anspruch 10, wobei die Glättungsdüse, die Abstreifdüse und der Tragkörper in einer Glättungs-Abstreif-Tragkörper-Anordnung zusammengefaßt sind.

12. Vorrichtung nach Anspruch 11, wobei die Glättungs-Abstreif-Tragkörper-Anordnung eine abgeteilte Verdichtervorkammer aufweist, wobei ein oberes Abteil in die Drucksteuerungsdüse mündet, ein Zwischenabteil in die Abstreifdüse mündet und ein unteres Abteil in die Glättungsdüse mündet, und Mittel aufweist, um den Gasdruck in jedem Abteil unabhängig zu steuern.

13. Vorrichtung nach einem der Ansprüche 6 bis 12, wobei entweder die Oberflächenveränderungseinrichtung oder die Abstreifdüse oder beide im wesentlichen senkrecht zu dem Band angeordnet sind.

## Revendications

1. Procédé de production d'un revêtement liquide lisse sur une bande de substrat, du type qui comprend le passage de la bande dans un bain d'un matière liquide de revêtement pour la production d'un revêtement d'épaisseur excessive, puis la séparation de la matière en excès du revêtement d'épaisseur excessive pour la production d'un revêtement d'épaisseur voulue, caractérisé par l'étape de lissage de la surface du revêtement d'épaisseur excessive avant la séparation de la matière en excès de ce revêtement.

2. Procédé selon la revendication 1, dans lequel l'étape de lissage de la surface comprend la projection d'un jet de lissage formé d'un gaz sur le revêtement d'épaisseur excessive, en quantité et avec une pression qui suffisent pour le lissage de la surface du revêtement d'épaisseur excessive et donnent un revêtement lissé d'épaisseur excessive, et l'étape de séparation de la matière en excès comprend ensuite la projection d'un jet de gaz de séparation sur le revêtement d'épaisseur excessive en quantité et à une pression qui suffisent pour réduire l'épaisseur du revêtement lissé d'épaisseur excessive à une épaisseur finale voulue, le jet de lissage ayant une intensité plus faible que celle du jet de séparation.

3. Procédé selon la revendication 2, dans lequel la bande est formée d'acier et le revêtement est formé d'une matière de revêtement d'alliage de zinc et d'aluminium, la bande d'acier se déplace à une vitesse d'environ 25 m/min, le jet de lissage est transmis par une buse ayant une largeur d'environ 0,4 mm et est placé à 10 mm environ de la bande, et la pression du gaz est comprise entre 2 et 10 kPa.

4. Procédé selon la revendication 3, dans lequel le jet de lissage est transmis à une pression pratiquement égale à 4,0 kPa.

5. Procédé de revêtement continu d'une bande selon l'une quelconque des revendications 1 à 3, qui comprend les étapes suivantes :
le passage de la bande dans un bain d'une matière liquide de revêtement,
l'entraînement d'une couche de la matière de revêtement hors du bain, à la surface de la bande,
la formation d'irrégularités de surface sur la couche de la matière de revêtement disposée sur la bande, puis
le lissage, par un dispositif de modification de surface, des irrégularités de la surface de la couche de la matière de revêtement placée sur la bande et entraînée à partir du bain, et,
juste ensuite, la séparation de la matière en excès de la bande.

6. Appareil de séparation par un jet de gaz destiné à être utilisé dans un procédé selon l'une quelconque des revendications 1 à 5, qui comprend une buse de séparation disposée afin qu'elle dirige un jet (11) de gaz de séparation vers une face d'une bande (7) sortant d'un bain de revêtement (18) et ayant une couche de la matière (9) du bain à sa surface, et un dispositif destiné à transmettre un gaz à la buse de séparation à une pression qui suffit pour qu'un jet efficace (11) de séparation soit libéré par la buse, caractérisé en ce que l'appareil comprend aussi un dispositif de modification de surface (17) disposé au-dessus du bain (8) à une distance suffisante pour que des irrégularités de surface se soient formées dans le revêtement après que la bande revêtue est sortie du bain, et au-dessous de la buse de séparation à une distance qui assure un lissage efficace de l'ensemble de la surface de la couche avant qu'elle n'atteigne le jet de séparation (11).

7. Appareil selon la revendication 6, dans lequel le dispositif de modification de surface comporte une buse de lissage disposée afin qu'elle dirige un jet de gaz de modification de surface (18) contre une face de la bande et un dispositif destiné à transmettre un gaz à la buse de lissage à une pression suffisante pour qu'un jet de modification de surface (18) soit libéré par la buse, le jet de modification de surface assurant efficacement le lissage de la couche de la matière du bain passant à son niveau, mais n'affectant pas notablement la quantité de matière passant à son niveau.

8. Appareil selon la revendication 7, dans lequel la bande est formée d'acier et le revêtement est une matière de revêtement d'alliage de zinc et d'aluminium, un dispositif provoque le déplacement de la bande d'acier à une vitesse d'environ 25 m/min, un dispositif transmet le jet de modification de surface par une buse de lissage ayant une largeur d'environ 0,4 mm et placée à 10 mm environ de la bande, et un dispositif est destiné à transmettre du gaz par la buse de lissage à une pression comprise entre 2 et 10 kPa.

9. Appareil selon la revendication 8, dans lequel la pression du gaz est pratiquement égale à 4,0 kPa.

10. Appareil selon l'une quelconque des revendications 6 à 9, dans lequel l'appareil comporte en outre un patin flottant ayant une surface de réaction et une buse de réglage de pression destinée à diriger un gaz dans l'espace compris entre la bande et la surface de réaction, le patin flottant étant placé à une certaine distance au-dessus de la buse de séparation.

11. Appareil selon la revendication 10, dans lequel la buse de lissage, la buse de séparation et le patin flottant sont associés dans un ensemble de lissage-séparation à patin flottant.

12. Appareil selon la revendication 11, dans lequel l'ensemble de lissage-séparation à patin flottant comprend une chambre compartimentée sous pression dans laquelle un compartiment supérieur alimente la buse de réglage de pression, un compartiment intermédiaire alimente la buse de séparation et un compartiment inférieur alimente la buse de lissage, et un dispositif destiné à régler indépendamment les pressions du gaz dans chacun des compartiments.

13. Appareil selon l'une quelconque des revendications 6 à 12, dans lequel le dispositif de modification de surface, la buse de séparation ou tous les deux sont placés en directions pratiquement perpendiculaires à la bande.
